(19) Europäisches Patentamt
European Patent Office
Office européen des brevets

(11) Veröffentlichungsnummer: **0 321 821**
**A2**

(12) # EUROPÄISCHE PATENTANMELDUNG

(21) Anmeldenummer: **88120733.6**

(22) Anmeldetag: **12.12.88**

(51) Int. Cl.⁴: **C08G 59/17 , C08G 59/04 , G02B 6/00**

(30) Priorität: **23.12.87 DE 3743993**

(43) Veröffentlichungstag der Anmeldung: **28.06.89 Patentblatt 89/26**

(84) Benannte Vertragsstaaten: **DE FR GB IT**

(71) Anmelder: **Siemens Aktiengesellschaft Berlin und München**
**Wittelsbacherplatz 2**
**D-8000 München 2(DE)**

(72) Erfinder: **Birkle, Siegfried, Dr.**
**Veit-Stoss-Strasse 46**
**D-8552 Höchstadt(DE)**
Erfinder: **Feucht, Hans-Dieter, Dr.**
**Paul-Gossen-Strasse 34**
**D-8520 Erlangen(DE)**
Erfinder: **Kamps, Rainer, Dr.**
**Sauerbruchstrasse 9**
**D-8630 Coburg(DE)**
Erfinder: **Rissel, Eva-Maria**
**Lindenweg 19**
**D-8550 Forchheim(DE)**

(54) **Flüssiges, strahlenhärtbares Harz zur Sekundärbeschichtung von Lichtwellenleitern.**

(57) Zur Herstellung von Sekundärcoatings für Lichtwellenleiter werden Harze benötigt, die flüssig sind und aufgrund einer hohen Strahlenempfindlichkeit und einer Viskosität, die allenfalls den Zusatz relativ geringer Mengen an Verdünnungsmitteln erfordert, Sekundärcoatings ergeben, welche ein Einfriergebiet ≥ +60 °C besitzen und mit den Primärcoatings, insbesondere auf der Basis von Urethanacrylaten, verträglich sind.

Dies wird durch ein Harz erreicht, das ein Reaktionsprodukt von (Meth)acrylsäure oder Glycerindi(meth)-acrylat bzw. Pentaerythrittri(meth)acrylat mit einem 2:1-Addukt aus einem Diepoxid und einem α,ω-Diol mit einem mittleren Molekulargewicht zwischen 600 und 3000 oder ein Reaktionsprodukt von (Meth)acrylsäure bzw. -säurechlorid oder Isocyanatoalkyl-(meth)acrylat mit einem Umsetzungsprodukt aus dem 2:1-Addukt und einem niedermolekularen einwertigen Alkohol ($C_1$ bis $C_{10}$), einem niedermolekularen zweiwertigen Alkohol ($C_2$ bis $C_4$) oder Wasser ist, wobei das Diepoxid ein aromatischer Diglycidylether und das α,ω-Diol ein α,ω-hydroxyterminiertes Polyoxyalkylen, ein α,ω-hydroxyterminierter Polyester, ein α,ω-hydroxyterminiertes Polybutadien oder ein α,ω-hydroxyterminiertes organofunktionelles Polysiloxan ist.

LWL-Coatings

EP 0 321 821 A2

## Flüssiges, strahlenhärtbares Harz zur Sekundärbeschichtung von Lichtwellenleitern

Die Erfindung betrifft ein flüssiges, strahlenhärtbares Harz zur Sekundärbeschichtung von Lichtwellenleitern, ein daraus hergestelltes Sekundärcoating und einen Lichtwellenleiter mit diesem Sekundärcoating.

Lichtwellenleiter weisen im allgemeinen zwei Beschichtungen auf: Ein weiches Primärcoating und ein festes Sekundärcoating, wobei derzeit als Primärcoating überwiegend strahlengehärtete Urethanacrylate und als Sekundärcoating überwiegend strahlengehärtete Epoxyacrylate oder Urethanacrylate Verwendung finden (siehe beispielsweise: "Polym. Mater. Sci. Eng." Vol. 55, 1986, Seiten 536 bis 539). Die zur Beschichtung eingesetzten Harze müssen dabei nicht nur strahlenhärtbar sein, was eine schnelle und kostengünstige Härtung erlaubt, sondern sie müssen auch flüssig sein, d.h. im wesentlichen lösungsmittelfrei verarbeitet werden können, um Forderungen hinsichtlich des Umweltschutzes erfüllen zu können.

Die als Sekundärcoating eingesetzten Epoxy- und Urethanacrylate weisen ein ausreichend hohes Einfriergebiet auf ($T_g \geq +60^{\circ}C$), sie sind darüber hinaus mit einem Primärcoating auf der Basis von Urethanacrylat kompatibel. Bei der Herstellung der Coatings ist aber auch wichtig, daß die entsprechenden Flüssigharze eine hohe Strahlenempfindlichkeit aufweisen, um eine hohe Aushärtungsgeschwindigkeit zu ermöglichen.

Aus "Chemical Abstracts" Vol. 106 (1987), Seite 7, Nr. 161368y beispielsweise ist ein Beschichtungsmaterial für optische Glasfasern auf Polyoxyalkylenbasis bekannt, das zur Herstellung von Sekundärcoatings dienen kann. Dieses Beschichtungsmaterial enthält Oligomere, die durch Umsetzung von hydroxyterminierten aliphatischen linearen Verbindungen, wie Polypropylenglykol, mit Diisocyanaten und Trishydroxyalkylisocyanurat-di(meth)acrylaten erhalten werden. Derartige Harze besitzen zwar pro Molekül mehr als zwei strahlenhärtbare Gruppen, so daß sie eine hohe Aushärtungsgeschwindigkeit aufweisen sollten, die Ankopplung der strahlenhärtbaren Gruppen über Bis-urethan-Strukturen (durch die Verwendung von Diisocyanaten) bringt aber eine hohe Viskosität mit sich. Es ist deshalb erforderlich, den bekannten Harzen große Mengen an Reaktivverdünner zuzusetzen, um sie als Beschichtungsmaterialien einsetzen zu können. Dies erfordert aber nicht nur einen zusätzlichen Aufwand, sondern ist auch mit anderen Nachteilen verbunden, wie hoher Dampfdruck der Reaktivverdünner.

Aufgabe der Erfindung ist es, ein flüssiges, strahlenhärtbares Harz anzugeben, das sich aufgrund einer hohen Strahlenempfindlichkeit und einer Viskosität, die allenfalls den Zusatz relativ geringer Mengen an Verdünnungsmitteln erfordert, zur Herstellung von Sekundärcoatings für Lichtwellenleiter eignet, welche ein Einfriergebiet $\geq +60^{\circ}C$ besitzen und mit den Primärcoatings, insbesondere auf der Basis von Urethanacrylaten, verträglich sind.

Dies wird erfindungsgemäß dadurch erreicht, daß das Harz ein Reaktionsprodukt von (Meth)acrylsäure oder Glycerindi(meth)acrylat bzw. Pentaerythrittri(meth)acrylat mit einem 2:1-Addukt aus einem Diepoxid und einem $\alpha,\omega$-Diol mit einem mittleren Molekulargewicht zwischen 600 und 3000 oder ein Reaktionsprodukt von (Meth)acrylsäure bzw. -säurechlorid oder Isocyanatoalkyl(meth)acrylat mit einem Umsetzungsprodukt aus dem 2:1-Addukt und einem niedermolekularen einwertigen Alkohol ($C_1$ bis $C_{10}$), einem niedermolekularen zweiwertigen Alkohol ($C_2$ bis $C_4$) oder Wasser ist, wobei das Diepoxid ein aromatischer Diglycidylether und das $\alpha,\omega$-Diol ein $\alpha,\omega$-hydroxyterminiertes Polyoxyalkylen, ein $\alpha,\omega$-hydroxyterminierter Polyester, ein $\alpha,\omega$-hydroxyterminiertes Polybutadien oder ein $\alpha,\omega$-hydroxyterminiertes organofunktionelles Polysiloxan ist.

Das Diepoxid, d.h. der aromatische Diglycidylether, ist vorzugsweise Bisphenol A- oder Bisphenol F-Diglycidylether. Als $\alpha,\omega$-Diole dienen vorzugsweise folgende Verbindungen:

- Polytetrahydrofuran, Polypropylenglykol oder ein Ethylenoxid-Tetrahydrofuran-Copolymer (als $\alpha,\omega$-hydroxyterminiertes Polyoxyalkylen);
- Polycaprolactondiol (als $\alpha,\omega$-hydroxyterminierter Polyester);
- lineares Polydimethylsiloxan mit entständigen primären Hydroxyalkylgruppen (als $\alpha,\omega$-hydroxyterminiertes organofunktionelles Polysiloxan).

Die 2:1-Addukte, die durch Umsetzung von Diepoxiden (Formel I) mit $\alpha,\omega$-Diolen (Formel II) gebildet werden, besitzen eine Struktur entsprechend der allgemeinen Formel III:

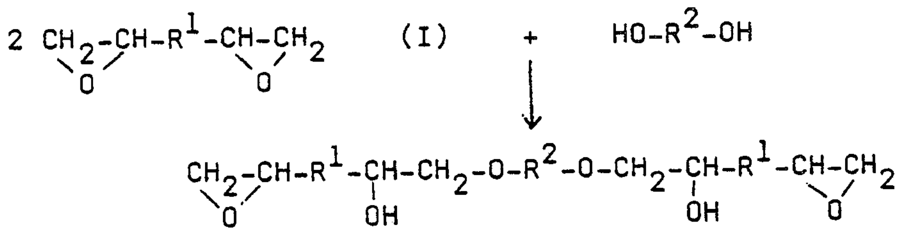

(I) (II) (III)

Zur Herstellung der 2:1-Addukte werden das Diepoxid und das Diol in einem niedrigsiedenden organischen Lösungsmittel (wie Trichlormethan) bei erhöhter Temperatur (< 80 °C) in Gegenwart eines sauren Katalysators (wie Trifluormethansulfonsäure) miteinander zur Reaktion gebracht. Das Verhältnis der Ausgangskomponenten Diepoxid und Diol liegt dabei etwa bei 2:1.

Die endständigen Epoxidgruppen der 2:1-Addukte werden dann geöffnet, d.h. die 2:1-Addukte werden folgender Reaktion (a) oder (b) unterworfen:

(a) Umsetzung entweder mit (Meth)acrylsäure oder mit Glycerindi(meth)acrylat bzw. Pentaerythrittri(meth)acrylat, z.B.:

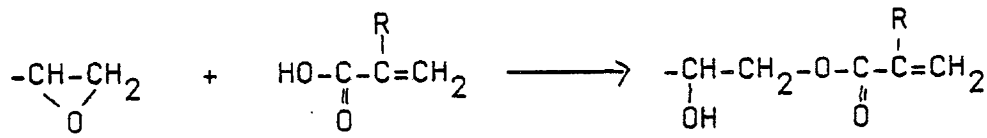

aus III    R = H, $CH_3$

(b) Umsetzung entweder mit Wasser oder mit einem einwertigen Alkohol oder mit einem zweiwertigen Alkohol:

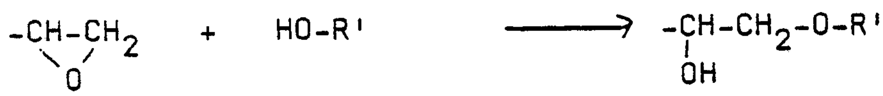

aus III    R' = H, Alkyl, R''-OH (R'' = Alkylen)

Während bei der Reaktion (a) nicht nur eine Ringöffnung erfolgt, sondern gleichzeitig auch strahlenhärtbare Gruppen eingeführt werden, wird bei der Reaktion (b) der Epoxidring nur geöffnet. Deshalb wird hierbei das Umsetzungsprodukt noch mit (Meth)acrylsäure bzw. -säurechlorid oder mit Isocyanatoalkyl(meth)acrylat zur Reaktion gebracht, wobei die Ankopplung der strahlenhärtbaren Gruppen erfolgt.

Die flüssigen, strahlenhärtbaren Harze nach der Erfindung eignen sich zur Herstellung von Sekundärcoatings, d.h. sie weisen die für diesen Zweck erforderliche Viskosität auf. Diese Harze sind ferner hochempfindlich gegenüber Strahlung, wie UV-Strahlung, was wiederum eine hohe Aushärtungsgeschwindigkeit bedingt. Pro Molekül können diese Harze nämlich bis zu acht strahlenhärtbare Gruppen enthalten. Auch im Höchstfall ist dabei aber die erforderliche Flexibilität noch gewährleistet, weil das den Harzen zugrundeliegende Diol ein relativ hohes mittleres Molekulargewicht aufweist, nämlich ein Molekulargewicht zwischen 600 und 3000.

Die aus den flüssigen, strahlenhärtbaren Harzen gemäß der Erfindung hergestellten Sekundärcoatings besitzen ein Einfriergebiet > + 60 °C. Ferner weisen diese Sekundärcoatings polare Gruppen auf und sind somit unter anderem mit Primärcoatings auf der Basis von Urethanacrylaten verträglich. Insbesondere zeigen die Sekundärcoatings nach der Erfindung eine gute Verträglichkeit mit den Primärcoatings, die in den deutschen Patentanmeldungen Akt.Z. P 37 43 990.1 - "Flüssiges, strahlenhärtbares Harz zur Primärbeschichtung von Lichtwellenleitern" und Akt.Z. P 37 43 873.5 - "Flüssiges, strahlenhärtbares Harz zur Beschichtung von Lichtwellenleitern" beschrieben sind.

Anhand von Ausführungsbeispielen soll die Erfindung noch näher erläutert werden.

Beispiel 1

In einen 1 l-Vierhalskolben (mit Rührer, Innenthermometer, Tropftrichter und Rückflußkühler mit Trokkenrohr) werden 100 g eines im Handel erhältlichen Polytetrahydrofurans mit einem mittleren Molekulargewicht von 2000 ( ≙ 0,1 mol -OH) und 300 g trockenes Trichlormethan, stabilisiert mit 2-Methyl-buten-2, gegeben. Nach der Zugabe von ca. 1 ml Trifluormethansulfonsäure als Katalysator wird das Gemisch auf ca. 60 °C erwärmt, dann werden innerhalb einer Stunde 34 g Bisphenol A-Diglycidylether ( ≙ 0,2 mol Epoxid), gelöst in 100 g trockenem Trichlormethan, unter Rühren zugetropft. Das Reaktionsgemisch wird anschließend bei 60 °C so lange gerührt, bis ca. 50 % der Epoxidgruppen umgesetzt sind. Dann wird eine den restlichen Epoxidgruppen äquimolare Menge an Ethylenglykol (1 mol Ethylenglykol pro freie Epoxidgruppe) zugegeben und das Reaktionsgemisch noch so lange bei 60 °C gerührt, bis kein Epoxid mehr nachweisbar ist. Nach dem Abkühlen werden 10 g vernetztes Poly(4-vinylpyridin) zuge setzt und dann wird 6 h bei Raumtemperatur gerührt. Anschliessend wird abgesaugt und danach über ein 0,8 µm-Membranfilter druckfiltriert. Das Lösungsmittel wird anschließend im Vakuum bei einer Badtemperatur von ca. 80 °C entfernt. Es werden ca. 125 g eines 2:1-Adduktes aus dem Diepoxid und dem α,ω-Diol in Form eines klaren, leicht gelblichen, hochviskosen Öls erhalten (OH-Wert: 0,173 mol/100 g).

In einen 500 ml-Dreihalskolben (mit Innenthermometer, Tropftrichter, Trockenrohr und einem Magnetrührstäbchen) werden 100 g des in der vorstehend beschriebenen Weise erhaltenen 2:1-Adduktes, gelöst in 100 g trockenem Trichlormethan, gegeben. Nach der Zugabe von ca. 0,5 ml einer Dibutylzinndilauratlösung (10 g in 100 ml $CHCl_3$) als Katalysator werden 26,8 g Isocyanatoethyl-methacrylat ( ≙ 0,173 mol -NCO), gelöst in 50 g trockenem Trichormethan, innerhalb einer Stunde bei Raumtemperatur unter Rühren zugetropft; die Reaktionstemperatur soll dabei 30 °C nicht überschreiten. Das Reaktionsgemisch wird dann bei Raumtemperatur so lange gerührt, bis kein Isocyanat mehr nachweisbar ist. Anschließend wird das Lösungsmittel im Vakuum bei einer Badtemperatur von 40 °C entfernt. Es werden ca. 120 g eines klaren, leicht gelblichen Harzes mit einer Viskosität von ca. 58000 mPa.s (bei 23 °C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare, feste Folien erhalten, die eine Glasübergangstemperatur von 82 °C besitzen.

Aus einer Probe des Harzes, die 3 Masse-% eines Photoinitiators auf Hydroxypropiophenon-Basis enthält, werden ca. 500 µm starke Folien gegossen und mittels UV-Strahlung innerhalb von 30 s vollständig ausgehärtet (UV-Strahler mit einer Strahlungsintensität von 3 mW/ $cm^2$). Die ausgehärteten Folien sind klar und fest, und sie besitzen eine Glasübergangstemperatur von 80 °C. Diese Folien eignen sich somit, ebenso wie die Folien der vorstehend genannten Art, als Sekundärcoating für Lichtwellenleiter.

Beispiel 2

Entsprechend Beispiel 1 werden 65 g eines im Handel erhältlichen Polytetrahydrofurans mit einem mittleren Molekulargewicht von 650 ( ≙ 0,2 mol -OH), gelöst in 300 g trockenem Trichlormethan, in Gegenwart von ca. 1 ml Trifluormethansulfonsäure mit 68 g Bisphenol A-Diglycidylether ( ≙ 0,4 mol Epoxid), gelöst in 100 g trockenem Trichlormethan, zur Reaktion gebracht. Das Reaktionsgemisch wird dann entsprechend Beispiel 1 weiterbehandelt und aufgearbeitet. Es werden ca. 120 g eines 2:1-Adduktes aus dem Diepoxid und dem α,ω-Diol in Form eines klaren, leicht gelblichen, hochviskosen Öls erhalten (OH-Wert: 0,33 mol/100 g).

100 g des in der vorstehend beschriebenen Weise erhaltenen 2:1-Adduktes, gelöst in 100 g trockenem Trichlormethan, werden entsprechend Beispiel 1 in Gegenwart von ca. 0,5 ml einer Dibutylzinndilauratlösung mit 51,2 g Isocyanatoethyl-methacrylat ( ≙ 0,33 mol -NCO), gelöst in 50 g trockenem Trichlormethan, zur Reaktion gebracht. Das Reaktionsgemisch wird dann entsprechend Beispiel 1 weiterbehandelt und aufgearbeitet. Es werden ca. 145 g eines klaren, leicht gelblichen, hochviskosen Harzes mit einer Viskosität von ca. 62000 mPa.s (bei 23 °C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare, feste Folien erhalten, die eine Glasübergangstemperatur von 80 °C besitzen. Die Folien eignen sich somit als Sekundärcoating für Lichtwellenleiter.

Beispiel 3

Entsprechend Beispiel 1 werden 100 g eines im Handel erhältlichen Ethylenoxid-Tetrahydrofuran-Copolyetherglykols mit einem mittleren Molekulargewicht von 2000 ( ≙ 0,1 mol -OH), gelöst in 300 g

trockenem Trichlormethan, in Gegenwart von ca. 1 ml Trifluormethansulfonsäure mit 34 g Bisphenol A-Diglycidylether ( ≙ 0,2 mol Epoxid), gelöst in 100 g trockenem Trichlormethan, zur Reaktion gebracht. Das Reaktionsgemisch wird dann entsprechend Beispiel 1 weiterbehandelt und aufgearbeitet. Es werden ca. 115 g eines 2:1-Adduktes aus dem Diepoxid und dem $\alpha,\omega$-Diol in Form eines klaren, leicht gelblichen Öls erhalten (OH-Wert: 0,158 mol/100 g).

100 g des in der vorstehend beschriebenen Weise erhaltenen 2:1-Adduktes, gelöst in 100 g trockenem Trichlormethan, werden entsprechend Beispiel 1 in Gegenwart von ca. 0,5 ml einer Dibutylzinndilauratlösung mit 24,5 g Isocyanatoethyl-methacrylat ( ≙ 0,158 mol -NCO), gelöst in 50 g trockenem Trichlormethan, zur Reaktion gebracht. Das Reaktionsgemisch wird dann entsprechend Beispiel 1 weiterbehandelt und aufgearbeitet. Es werden ca. 120 g eines klaren, leicht gelblichen Harzes mit einer Viskosität von ca. 30500 mPa.s (bei 23 °C) erhalten.

Eine ca. 500 µm starke Schicht des Harzes wird unter Stickstoff mit Elektronenstrahlen ausgehärtet (Beschleunigungsspannung: 1 MeV; Dosis: 25 kGy). Es werden klare, relativ feste Folien erhalten, die eine Glasübergangstemperatur von 60 °C besitzen. Die Folien eignen sich somit als Sekundärcoating für Lichtwellenleiter.

Beispiel 4

Entsprechend Beispiel 1 werden 217 g eines im Handel unter dem Namen Baysilon 502 (Baysilon^R ist ein Warenzeichen der Fa. Bayer AG) erhältlichen linearen Polydimethylsiloxans mit end ständigen primären Hydroxyalkylgruppen ( ≙ 0,4 mol -OH), gelöst in 200 g trockenem Trichlormethan, in Gegenwart von ca. 0,5 ml Trifluormethansulfonsäure mit 136 g Bisphenol A-Diglycidylether ( ≙ 0,8 mol Epoxid), gelöst in 350 g trockenem Trichlormethan, zur Reaktion gebracht. Das Reaktionsgemisch wird bei 60 °C so lange gerührt, bis ca. 50 % der Epoxidgruppen umgesetzt sind. Die restlichen Epoxidgruppen werden dann mit 60 g Butandiol (3facher Überschuß) zur Reaktion gebracht. Anschließend wird das Reaktionsgemisch 5mal mit je 400 ml Wasser extrahiert, mit Natriumsulfat getrocknet und über ein 0,8 µm-Membranfilter druckfiltriert. Das Lösungsmittel wird dann im Vakuum bei einer Badtemperatur von ca. 60 °C entfernt. Es werden ca. 255 g eines 2:1-Adduktes aus dem Diepoxid und dem $\alpha,\omega$-hydroxyterminierten organofunktionellen Polysiloxan in Form eines klaren, farblosen, viskosen Öls erhalten (OH-Wert: 0,227 mol/100 g).

120 g des in der vorstehend beschriebenen Weise erhaltenen 2:1-Adduktes, gelöst in 150 g trockenem Dichlormethan, werden in Gegenwart von ca. 0,5 ml einer Dibutylzinndilauratlösung entsprechend Beispiel 1 innerhalb von 90 min mit 42,4 g Isocyanatoethyl-methacrylat ( ≙ 0,272 mol -NCO), gelöst in 90 g trockenem Trichlormethan, zur Reaktion gebracht. Das Reaktionsgemisch wird dann entsprechend Beispiel 1 weiterbehandelt und aufgearbeitet, wobei das Lösungsmittel im Vakuum bei einer Badtemperatur von ca. 30 °C entfernt wird. Es werden ca. 150 g eines klaren, leicht gelblichen, zähflüssigen Harzes mit einer Viskosität von ca. 35000 mPa.s (bei 23 °C) erhalten.

Aus einer Probe des Harzes werden ca. 500 µm starke Folien gegossen und unter Stickstoff mit Elektronenstrahlen vollständig ausgehärtet (Beschleunigungsspannung: 1 MeV; Dosis: 25 kGy). Es werden Folien mit einer Glasübergangstemperatur von 86 °C und einem E-Modul von 270 $N/mm^2$ erhalten. Die Folien eignen sich somit als Sekundärcoating für Lichtwellenleiter.

## Ansprüche

1. Flüssiges, strahlenhärtbares Harz zur Sekundärbeschichtung von Lichtwellenleitern, **dadurch gekennzeichnet,** daß es ein Reaktionsprodukt von (Meth)acrylsäure oder Glycerindi(meth)acrylat bzw. Pentaerythrittri(meth)acrylat mit einem 2:1-Addukt aus einem Diepoxid und einem $\alpha,\omega$-Diol mit einem mittleren Molekulargewicht zwischen 600 und 3000 oder ein Reaktionsprodukt von (Meth)acrylsäure bzw. -säurechlorid oder Isocyanatoalkyl-(meth)acrylat mit einem Umsetzungsprodukt aus dem 2:1-Addukt und einem niedermolekularen einwertigen Alkohol ($C_1$ bis $C_{10}$), einem niedermolekularen zweiwertigen Alkohol ($C_2$ bis $C_4$) oder Wasser ist, wobei das Diepoxid ein aromatischer Diglycidylether und das $\alpha,\omega$-Diol ein $\alpha,\omega$-hydroxyterminiertes Polyoxyalkylen, ein $\alpha,\omega$-hydroxyterminierter Polyester, ein $\alpha,\omega$-hydroxyterminiertes Polybutadien oder ein $\alpha,\omega$-hydroxyterminiertes organofunktionelles Polysiloxan ist.

2. Flüssiges, strahlenhärtbares Harz nach Anspruch 1, **dadurch gekennzeichnet,** daß das Diepoxid Bisphenol A- oder Bisphenol F-Diglycidylether ist.

3. Flüssiges, strahlenhärtbares Harz nach Anspruch 1 oder 2, **dadurch gekennzeichnet**, daß das α,ω-Diol Polytetrahydrofuran, Polypropylenglykol, ein Ethylenoxid-Tetrahydrofuran-Copolymer, Polycaprolactondiol oder ein lineares Polydimethylsiloxan mit entständigen primären Hydroxyalkylgruppen ist.

4. Sekundärcoating für Lichtwellenleiter, **dadurch gekennzeichnet,** daß es aus wenigstens einem strahlengehärteten Harz nach einem der Ansprüche 1 bis 3 besteht.

5. Lichtwellenleiter, **gekennzeichnet**durch ein Sekundärcoating nach Anspruch 4.